# EUROPEAN PATENT APPLICATION

(11) **EP 2 254 371 A1**
(43) Date of publication of application: **24.11.2010**
(21) Application number: 10176216.9
(22) Date of filing: 08.02.2008
(51) Int. Cl.: H04W 36/14

(54) **A method and apparatus for media independent handover capability discovery**

(30) Priority: 08.02.2007 US 888789 P
(62) Divisional of application: 08725312.6
(71) Applicant: InterDigital Technology Corporation, Wilmington, DE 19810 (US)
(72) Inventor: Olivera-Hernandez, Ulises, Kirkland Québec H9J 4A5 (CA); Hossain, Khalid, S., Montreal Québec H2X 2C9 (CA); Watfa, Mahmoud, Montreal Québec H2E 2A5 (CA)
(74) Representative: Johansson, Magnus

(57) **Abstract**

A first media independent handover function (MIHF) receives a media independent handover (MIH) capabilities discovery request from a second MIHF and generates a MIH capabilities discovery response message, including one or more parameters. Then the first MIHF then sends the MIH capabilities discovery response to the second MIHF. Based on the information contained in the MIH capabilities discovery response, the first MIHF may receive a handover request message from the second MIHF. The one or more parameters included within the discovery response message indicates the specific technologies for which the first MIHF supports a MMB handover. The one or more parameters may include a list of the technologies for which a make-before-break (MMB) handover is supported. For example, a parameter may use a specific bit structure wherein each bit is a Boolean representation of whether MMB handover is supported for a specific type of technology.

## Description

BACKGROUND

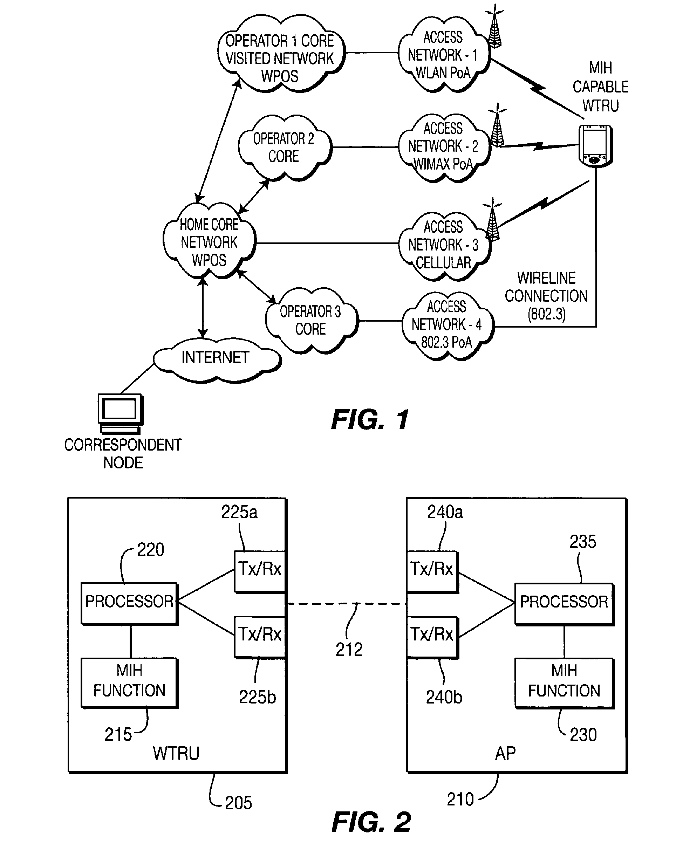

The IEEE 802.21 standard includes mechanisms and procedures that aid in the execution and management of inter-system handovers. In particular, IEEE 802.21 defines a media independent handover (MIH) function (MIHF) which resides in communications entities of several wireless systems capable of supporting inter-system handover. For example, Figure 1 shows an example of network architecture for wireless systems capable of supporting inter-system handover. These underlying technologies may include for example 3GPP, 3GPP2 and IEEE-based networks such as IEEE 802.xx, code division multiple access (CDMA) 2000; universal mobile telephone system (UMTS), GSM, long term evolution (LTE) or any other wireless communication system including future wireless communication systems not yet developed.

MIH functions can be implemented in any wireless communication system. The prior art has suggested enhancements regarding the use of several messages, including an *MIH_Capability_Discover Request*/*Confirm* message. Such enhancements include modifications to message parameters so that MIH capable nodes can discover the capabilities of other MIH enabled peers in an efficient manner.

The modifications to the message parameters enables a single *MIH_Capability_Discover* message to be used to discover all the important capabilities of a peer node, such as the number and type of supported links and the link events pertaining to specific link types as opposed to the previous method where one such message had to be sent for every link type that is supported at a remote end.

Although proposed structures may provide an efficient way of discovering link-related capabilities and the type of transport supported, such structures do not facilitate determination of other important the capabilities of these links. Accordingly, a vast improvement in the capability discovery is still greatly needed.

SUMMARY

A first MIHF receives a MIH capabilities discovery request from a second MIHF and generates a MIH capabilities discovery response message, including one or more parameters. Then the first MIHF then sends the MIH capabilities discovery response to the second MIHF. Based on the information contained in the MIH capabilities discovery response, the first MIHF may receive a handover request message from the second MIHF.

The one or more parameters included within the discovery response message indicates the specific technologies for which the first MIHF supports a MMB handover. The one or more parameters may include a list of the technologies for which a make-before-break (MMB) handover is supported. For example, a parameter may use a specific bit structure wherein each bit is a Boolean representation of whether MMB handover is supported for a specific type of technology.

BRIEF DESCRIPTION OF THE DRAWINGS

Figure 1 an example of a wireless communication system configured to support intersystem handover;

Figure 2 is a block diagram of a typical wireless communication system;

Figure 3 is a flow chart of an method of discovering MIH capabilities; and

Figure 4 is a flow chart of a method of providing MIH capabilities.

DETAILED DESCRIPTION

When referred to hereafter, the terminology "wireless transmit/receive unit (WTRU)" includes but is not limited to a user equipment (UE), a mobile station (STA), a mobile node (MN), a fixed or mobile subscriber unit, a pager, a cellular telephone, a personal digital assistant (PDA), an MIH function, a computer, or any other type of user device capable of operating in a wireless environment. When referred to hereafter, the terminology" access point (AP )" includes but is not limited to a Node-B, a site controller, base station, a point of attachment (PoA), a point of service (PoS), an MIH function, or any other type of interfacing device capable of operating in a wireless environment.

Figure 2 is a block diagram of a wireless communication system 200 includa wireless transmit receive unit 205 and an AP 1210. The WTRU 205 and the AP 210 communicate via a wireless communication link, 212.

As shown in Figure 2, the WTRU 215 includes an MIHF 215, a processor 220, at least one transceiver (225a, 225b). The processor 220 is attached to the MIHF 215 and each of the transceivers 225a, 225b. The MIHF 215 is configured to carry out media independent handover related processes, including generating an MIH capabilities discovery request, and processing an MIH capabilities response.

Also shown in Figure 2, the AP 210 includes an MIHF 230, a processor 235, at least one transceiver (240a, 240b). The processor 235 is attached to the MIH function 215 and each of the transceivers 225a, 225b. The MIHF 230 is configured to carry out media independent handover related processes, including processing an MIH capabilities discovery request, and generating an MIH capabilities response. Optionally, the MIHF 230 may be located outside of the AP 210 in the network (not shown). For example, the AP 210 may be connected to an access router (not shown) which may house the MIHF 230.

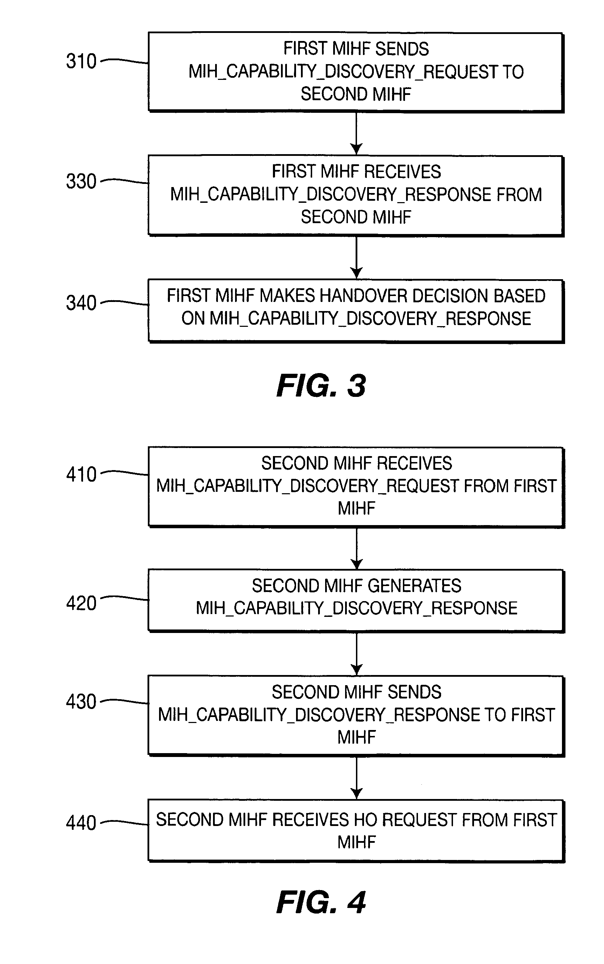

Figure 3 shows a flow diagram of a method 300 for receiving MIH capabilities. First, the first MIHF sends an MIH capabilities discovery request to a second MIHF, at 310. For the purposes of the method of 300, the first MIHF could be located in an the AP 210 as MIHF 230, or the first MIHF could be located in the WTRU 205 as MIHF 215. In a third alternative the MIHF could be located in the network (not shown). In response, the first MIHF receives an MIH capabilities discovery response from the second MIHF, at 320. Then the first MIHF makes a decision whether to handover to the second MIHF based on information contained in the MIH capabilities discovery response, at 340.

The MIH capabilities discovery response message includes at least a Linc parameter and an MMB handover support parameter (*MMBHandoverSupport*). The Linc element will include a list of the network types supported by the MIHF. The *MMBHandoverSupport* parameter provides a list of the technologies for which an MMB handover is supported. For example, the *MMBHandoverSupport* parameter may use a specific bit structure wherein each bit is a Boolean representation of whether MMB handover is supported for a specific type of technology. It should also be noted, that it is assumed that all available links support break-before-make (BBM) handover by default, therefore there information relating to BBM handover capabilities is not needed.

**Table 1 shows an example of a possible bit structure for the MMBHandoverSupport parameter; however, one of skill in the art would recognize that many other structures are possible and Table 1 is in no way intended to limit the scope of the invention to the specific bit structure therein.**

| **Parameter** | **Description** |
|---|---|
| *MBBHandoverSupport* | A bit field that has as many bits as there are potential supported lines. There should be as many entries for this field as there are possible supported links. |
| | |
| | Bit #0 - indicates if a MBB handover to 802.3 is supported |
| | Bit #1- indicates if a MBB handover to 802.11 is supported |
| | Bit #2 - indicates if a MBB handover to 802.16 is supported |
| | Bit #3 - indicates if a MBB handover to CDMA2000 is supported |
| | Bit #4 - indicates if a MBB handover to UMTS is supported |
| | Bit #5 - indicates if a MBB handover to CDMA2000-HRPD is |
| | supported Bit #6 - indicates if a MBB handover to GSM is supported |
| | Bit #7 to Bit #15 - reserved for future use |

Table 1 - example of possible bit structure for the proposed *MBBHandoverSupport* parameter

Optionally, the MIH discovery response message may also include a number of supported links parameter *NumberOfSupportedLinks.* This parameter would indicate the number of links that the communication entity associated with the MIHF supports.

**Table 2 shows an example of a definition for the NumberOfSupportedLinks parameter; however, one of skill in the art would recognize that many other structures are possible and Table 2 is in no way intended to limit the scope of the invention to the specific bit definition or bit structure therein.**

| **Parameter** | **Description** |
|---|---|
| *NumberOfSupportedLinks* | An 8-bit unsigned integer that represents the number of supported links in an MIH capable node |

Table 2 - example of the proposed *NumberOfSupportedLinks* parameter.

Figure 4 shows a flow diagram of a method 400 for providing MIH capabilities to a first MIHF. For the purposes of the method of 400, the first MIHF could be located in an the AP 210 as MIHF 230, or the first MIHF could be located in the WTRU 205 as MIHF 215. In a third alternative the MIHF could be located in the network (not shown). First, the second MIHF receives an MIH capabilities discovery request from the first MIHF, at 410. Next, the second MIHF generates an MIH capabilities discovery response message, including an *MMBhandoverSupport* parameter indicating the specific technologies for which the second MIHF supports an MMB handover, at 420. Then the second MIHF sends the MIH capabilities discovery response to the first MIHF, at step 430. Optionally, the second MIHF may send the MIH capabilities discovery response via broadcast, multicast or unicast. Based on the information contained in the MIH capabilities discovery response, the second MIHF may receive a handover request message from the first MIHF, at 440.

In an alternative embodiment, it may not be assumed that all of the available links support BBM handover. In this situation, a third parameter may be included in the MIH capabilities discover message to indicate the availability of BBM handover for specific technologies (*BBMHandoverSupport*). Table 4 shows an example of a possible bit structure for the *BBMHandouerSupport* parameter; however, one of skill in the art would recognize that many other structures are possible and Table 1 is in no way intended to limit the scope of the invention to the specific bit structure therein.

**Table 3 - Example for the proposed BBMHandoverSupport parameter**

| **Parameter** | **Description** |
|---|---|
| *BBMHandoverSupport* | A bit field that has as many bits as there are potential supported links. There should be as many entries for this field as there are possible supported links. |
| | Bit #0 - indicates if a BBM handover to 802.3 is supported |
| | Bit #1- indicates if a BBM handover to 802.11 is supported |
| | Bit #2 - indicates if a BBM handover to 802.16 is supported |
| | Bit #3 - indicates if a BBM handover to CDMA2000 is supported |
| | Bit #4 - indicates if a BBM handover to UMTS is supported |
| | Bit #5 - indicates if a BBM handover to CDMA2000-HRPD is supported |
| | Bit #6 - indicates if a BBM handover to GSM is supported |
| | Bit #7 to Bit #15 - reserved for future use |

The procedures 300, 400, of Figures 3 and 4 the first and second MIHFs may be located in a WTRU 205, an AP 210, or some other network entity such as an access router (not shown). Optionally, the procedures 300, 400, of Figures 3 and 4 may be performed so that the AP may request the MIH capabilities of the WTRU 205, and the WTRU 205 may generate and send an MIH capabilities response message to the AP 210 with information relating to the MIH capabilities of the WTRU 205.

Although features and elements are described above in particular combinations, each feature or element can be used alone without the other features and elements or in various combinations with or without other features and elements. The methods or flow charts provided herein may be implemented in a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The FIRST MIHFmay be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) or Ultra Wide Band (UWB) module.

### Itemized list of embodiments

1. A media independent handover function (MIHF) for use in a wireless communication system connected to a transceiver configured to perform a media independent handover (MIH).
2. The MIHF of embodiment 1, wherein the MIHF is configured to transmit and receive media independent handover messages.
3. The MIHF of as in any one of the preceding embodiments, wherein the MIHF is configured to transmit and receive media independent handover messages including a NumberOfSupportedLinks parameter.
4. The MIHF of as in any one of the preceding embodiments, wherein the MIHF is configured to transmit and receive media independent handover messages including a MBBHandoverSupport parameter.
5. The MIHF of as in any one of the preceding embodiments, wherein the MIHF is configured to transmit and receive media independent handover messages including a BBMHandoverSupport parameter.
6. The MIHF of as in any one of the preceding embodiments, wherein the MIHF is configured to perform make before break handovers.
7. The MIHF as in any one of the preceding embodiments, wherein the MIHF is configured to perform break before make handovers.
8. The MIHF as any one of the preceding embodiments, wherein the MIHF is configured to transmit and receive messages containing MIH link capability.
9. The MIHF as in any one of the preceding embodiments, wherein the MIHF is configured to transmit and receive messages containing MIH link quantity.
10. The MIHF as in any one of the preceding embodiments, wherein the MIHF is configured to transmit and receive a Handover Support Message.
11. The MIHF as in any one of the preceding embodiments, wherein the Handover Support Message comprises information regarding device handover support for a plurality of protocols.
12. The MIHF as in any one of the preceding embodiments, wherein the Handover Support Message comprises a plurality of bits configured to indicate device handover support for a plurality of protocols.
13. The MIHF as in any one of the preceding embodiments, wherein the plurality of bits Handover Support Message comprises information regarding device handover support for a plurality of protocols.
14. The MIHF as in any one of the preceding embodiments, wherein the Handover Support Message comprises information regarding device handover support for a plurality of protocols.
15. The MIHF as in any one of the preceding embodiments, wherein the MIH is make-before-break handover.
16. The MIHF as in any one of the preceding embodiments, wherein the MIH is break-before-make handover.
17. The MIHF as in any one of the preceding embodiments wherein the MIHF is located in a wireless transmit receive unit for use in a 3GPP system.
18. The MIHF as in any one of the preceding embodiments wherein the MIHF is located in a node-B for use in a 3GPP system.
19. The MIHF as in any one of the preceding embodiments wherein the MIHF is located in base station for use in a 3GPP system.
20. The MIHF as in any one of the preceding embodiments wherein the MIHF is located in a mobile unit for use in a wireless local area network.
21. The MIHF as in any one of the preceding embodiments wherein the MIHF is located in an access point for use in a wireless local area network.
22. The MIHF of any one of the preceding embodiments wherein the MIHF is configured to
   transmit an information request message from a first node to a second node,and
   transmit a plurality of parameters from the second node to the first node, wherein the plurality of parameters indicates media independent handover information.
23. The MIHF as in embodiments 22 wherein the media independent handover information comprises a series of bits indicating protocol support.
24. The MIHF as in any one of embodiments 22-23, wherein the parameters indicate make-before-break handover support.
25. The MIHF as in any one of embodiments 22-24, wherein the parameters indicate break-before-make handover support.
26. The MIHF as in any one of embodiments 22-25, wherein the parameters include a NumberOfSupportedLinks parameter.
27. The MIHF as in any one of embodiments 22-26, wherein the parameters include a MBBHandoverSupport parameter.
28. The MIHF as in any one of embodiments 22-27, wherein the parameters include a BBMHandoverSupport parameter.
29. A wireless transmit receive unit configured for use with an MIHF of any one of the preceding embodiments.
30. An access point (AP) configured for use with an MIHF of any one of the preceding embodiments.
31. A method of receiving media independent handover (MIH) capabilities, the method comprising:
   sending a MIH capabilities request to an access point (AP);
   receiving a MIH capabilities response, including a make-before-break (MMB) handover parameter.
32. The method of item 31 wherein the MMB handover parameter includes a list of the technologies for which an MMB handover is supported.
33. The method of item 31 wherein MMB handover parameter is a Boolean representation of whether MMB handover is supported for a specific type of technology.
34. The method of item 31 further comprising:
   determining whether to handover based on the MIH capabilities response.
35. A method of providing media independent handover (MIH) capabilities, the method comprising:
   receiving a MIH capabilities request from a wireless transmit receive unit (WTRU);
   sending a MIH capabilities response, including a make-before-break (MMB) handover parameter.
36. The method of item 35 wherein the MMB handover parameter includes a list of the technologies for which an MMB handover is supported.
37. The method of item 35 wherein MMB handover parameter is a Boolean representation of whether MMB handover is supported for a specific type of technology.
38. The method of item 35 further comprising:
   determining whether to handover based on the MIH capabilities response.
39. A media independent handover (MIH) capable wireless transmit/receive unit (WTRU) configured to send and receive MIH capabilities, the WTRU comprising:
   a MIH function, configured to generate a MIH capabilities request;
   a transmitter configured to transmit the MIH capabilities request to an access point (AP); and
   a receiver configured to receive an MIH capabilities response, including a make-before-break (MMB) handover parameter, and to provide the MMB handover parameter to the MIH function.
40. The WTRU of item 39 wherein the MMB handover parameter includes a list of the technologies for which a MMB handover is supported.
41. The WTRU ofitem 39 wherein MMB handover parameter is a Boolean representation of whether MMB handover is supported for a specific type of technology.
42. The WTRU ofitem 39 further comprising:
   a processor configured to determine whether to handover based on the MIH capabilities response.
43. A media independent handover (MIH) capable access point (AP) configured to send and receive MIH capabilities, the AP comprising:
   a receiver, configured to receive a MIH capabilities request from a WTRU;
   a MIH function configured to generate an MIH capabilities response; and
   a transmitter configured to transmit an MIH capabilities response, including a make-before-break (MMB) handover parameter, and to provide the MMB handover parameter to the MIH function.
44. The AP of item 43 wherein the MMB handover parameter includes a list of the technologies for which a MMB handover is supported.
45. The AP of item 43 wherein MMB handover parameter is a Boolean representation of whether MMB handover is supported for a specific type of technology.
46. The AP of item 43 wherein the receiver is further configured to receive a request to handover in response to the transmitter transmitting the MIH capabilities response.

## Claims

1. A method for use in a wireless transmit/receive unit (WTRU), the method comprising:
sending a capabilities discovery request message via an access point (AP);
receiving a capabilities discovery response message that is responsive to the capabilities discovery request message, wherein the capabilities discovery response message indicates at least one technology for which make-before-break (MBB) handover is supported; and
performing a handover based on the capabilities discovery response message.

2. The method of claim 1, wherein the handover is performed from a first network of a first technology to a second network of a second technology.

3. The method of claim 2, wherein the handover is a MBB handover.

4. The method of claim 1 wherein the performing the handover includes sending a Media Independent Handover (MIH) handover request message.

5. The method of claim 1 wherein the capabilities discovery response message includes, for each of the at least one technology for which MBB handover is supported, a Boolean representation of whether MBB handover is supported for the type of technology.

6. The method of claim 1 wherein the capabilities discovery response message indicates that MBB handover is supported for one or more of: IEEE 802.3 technology; IEEE 802.11 technology; code division multiple access (CDMA) 2000 technology; Universal Mobile Telephone System (UMTS) technology; CDMA2000-HRPD technology; or Global System for Mobile Communications (GSM) technology.

7. The method of claim 1 wherein the capabilities discovery request message is sent to a Media Independent Handover Function (MIHF) and wherein the capabilities discovery response message is received from the MIHF.

8. A wireless transmit/receive unit (WTRU) comprising:
means for sending a capabilities discovery request message via an access point (AP);
means for receiving a capabilities discovery response message that is responsive to the capabilities discovery request message, wherein the capabilities discovery response message indicates at least one technology for which make-before-break (MBB) handover is supported; and
means for performing a handover based on the capabilities discovery response message.

9. The WTRU of claim 8, wherein the handover is performed from a first network of a first technology to a second network of a second technology.

10. The WTRU of claim 9, wherein the handover is a MBB handover.

11. The WTRU of claim 8 wherein the performing the handover includes sending a Media Independent Handover (MIH) handover request message.

12. The WTRU of claim 8 wherein the capabilities discovery response message includes, for each of the at least one technology for which MBB handover is supported, a Boolean representation of whether MBB handover is supported for the type of technology.

13. The WTRU of claim 8 wherein the capabilities discovery response message indicates that MBB handover is supported for one or more of: IEEE 802.10 technology; IEEE 802.18 technology; code division multiple access (CDMA) 2000 technology; Universal Mobile Telephone System (UMTS) technology; CDMA2000-HRPD technology; or Global System for Mobile Communications (GSM) technology.

14. The WTRU of claim 8 wherein the capabilities discovery request message is sent to a Media Independent Handover Function (MIHF) and wherein the capabilities discovery response message is received from the MIHF.
